# EUROPEAN PATENT APPLICATION

(11) **EP 1 677 096 A1**
(43) Date of publication of application: **05.07.2006**
(21) Application number: 06002309.0
(22) Date of filing: 01.11.1999
(51) Int. Cl.: G01N 21/25, G01N 21/35, G01M 15/00

(54) **Multilane remote sensing detector**

(30) Priority: 30.10.1998 US 106281 P
(62) Divisional of application: 99956793.6
(71) Applicant: Envirotest Systems, Inc., Tucson, AZ 85745 (US)
(72) Inventor: Didomenico, John D., Tucson, AZ 85749 (US); Johnson, James A., Tucson, AZ 85741 (US); Stedman, Donald H., Denver, CO 80210 (US); Bishop, Gary A., Louiseville, CO 80027 (US); Williams, John W., Littleton, CO 80123 (US)
(74) Representative: Beck, Simon Antony

(57) **Abstract**

A system for the remote sensing of vehicle emissions in a multilane setting with two or more vehicle travel lanes, the system comprising: at least one radiation source which emits a radiation beam across two or more vehicle travel lanes, and through an exhaust plume of a vehicle; at least one radiation detector for receiving the radiation beam; a receiver for receiving a signal from a transponder associated with the vehicle, wherein the signal includes vehicle information; and at least one processor, characterized in that the at least one processor receives emissions data from the at least one radiation detector and vehicle information from the receiver, and associates the emissions data with the vehicle information for the vehicle.

## Description

This application claims priority from U.S. Provisional application serial number 60/106,281 filed October 30,1998.

### Field of the invention

This invention relates to remote sensing of vehicle emissions on a multiple lane roadway.

### Background of the Invention

Remote emission detection systems in general are known. Typically, existing systems are used to detect emission data from a single vehicle traveling in a single lane of traffic such as an exit ramp from a highway. Such a configuration restricts the locations at which the device can be employed and limits the number of vehicles that can be processed in a given time period.

Another drawback of existing remote emission detection systems that it is difficult to correctly associate each vehicle with its emission data when more than one vehicle is present. For example, if multiple vehicles are present at the sensing location, each vehicle's exhaust plume may contribute emissions. Existing systems are not able to differentiate among several exhaust plumes.

These and other drawbacks exist.

### Summary of the Invention

An object of the invention is to overcome these and other drawbacks in existing devices.

Another object of the invention is to provide a multiple lane remote emission sensing system that increases the number of potential sites for remote emission testing.

Another object is to provide a multilane remote emission detection system that is able to distinguish the emissions due to a particular vehicle under conditions where more than one vehicle exhaust plume may be present.

Another object of certain embodiments of the invention is to provide a multilane remote emission detector that is substantially unobtrusive and does not interfere with vehicle traffic.

Another object of certain embodiments of the invention is to provide a multilane remote emission detection system that does not draw the attention of, or distract, motorists.

These and other objects of the invention are accomplished by various embodiments of the invention. Accordingly, there is provided a system and method for remotely detecting emissions from individual vehicles traveling on a multilane roadway. The remote detection system preferably comprises a source of radiation to be directed through the exhaust plume of a passing vehicle, at least one detector to detect the source radiation which remains after passing through the exhaust plume and a processor to process the data recorded by the detector and associate such data with a particular vehicle.

Optionally, some embodiments of the invention may comprise a speed and acceleration detection system. Some embodiments may comprise an imaging system to record an image of at least a part of the passing vehicle or read an identification tag on the vehicle in order to identify the vehicle. Some embodiments of the invention may provide a system and method for reliably and accurately determining the temperature of portions of a passing vehicle.

Another embodiment of the invention provides an unmanned bunkered emission detection system and method that may be operated unattended and may provide a rugged and unobtrusive roadside emission monitoring system.

### Brief Description of the Drawings

Figure 1 shows a schematic block diagram of components of an embodiment of a remote emission detection system.
Figure 2 shows a schematic block diagram of an embodiment of a thermal detection unit.
Figure 3 shows a schematic block diagram of an alternative embodiment of a thermal detection unit.
Figure 4 shows a schematic block diagram of an embodiment of the invention incorporating a speed and acceleration detection unit.
Figure 5 shows a schematic block diagram of an embodiment of a multilane remote emission detection system.
Figure 6 shows schematic block diagram of an embodiment of a multilane remote emission detection system.
Figure 7 shows a schematic block diagram of a bunkered remote emission detection system.
Figure 8 shows a perspective view of an embodiment of a bunkered remote emission detection system.
Figure 9 shows a perspective view of an embodiment of an overhead remote emission detection system.

### Detailed Description of the Preferred Embodiments

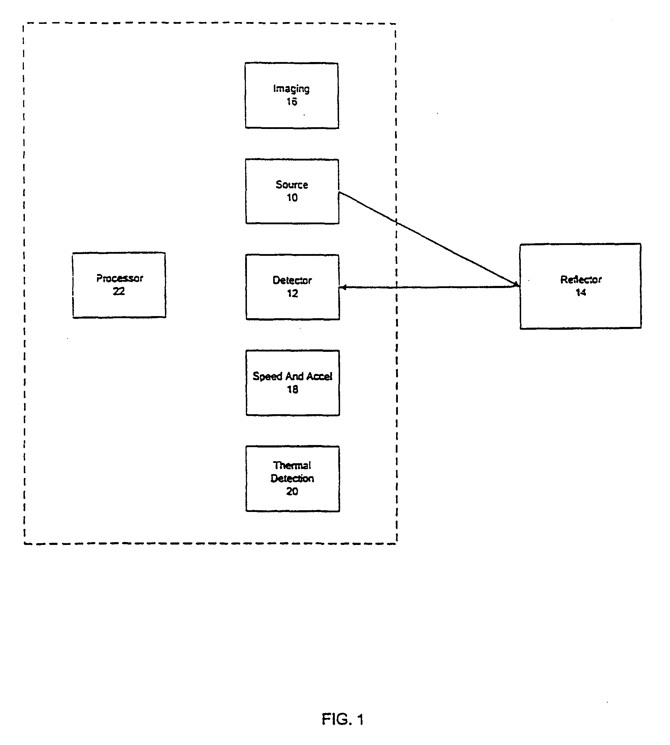

Fig. 1 shows a schematic representation of components of the remote emissions sensing device (RSD). Embodiments of the invention may include some or all of the various components as described below.

### Radiation Source

Preferably, an RSD comprises a source of electromagnetic radiation 10 which may be used in the absorption spectroscopy measurement of various components of vehicle exhaust emissions. Preferably, source 10 may comprise an infrared (IR) radiation source. Some embodiments of the RSD may include other types of radiation sources, for example, an ultraviolet (UV) source, a visible light source, or a combination of radiation sources.

### Radiation Detector

The RSD may further comprise a detector array 12 for detecting radiation. The detector array 12 is preferably chosen to permit detection of electromagnetic radiation emitted by the source 10. For example, detector array 12 may comprise a photodetector (*e*.*g*., a photodiode), a photomultiplier tube (PMT), a spectrometer or any other suitable radiation detector. For example, a mercury cadmium telluride (Hg-Cd-Te) photodetector may be used to detect IR radiation. Other suitable detectors or detector arrays 12 may also be used.

According to an embodiment of the invention, the RSD may comprise a single detector with multiple filters instead of an array employing multiple detectors. The multiple filters may be moveable, such as spinning filters, to allow multiple components to be detected. In this manner, a single detector can be employed to detect a plurality of different exhaust components because each of the moveable filters is designed to allow only the wavelength band of interest for a particular exhaust component to pass to the detector. According to another embodiment of the invention, the RSD may comprise a spectrometer, or other detecting device which may be used to detect more than one component.

### Reflector

Preferably, the RSD may comprise a reflector 14 mounted in a manner to allow radiation from the source 10 to be reflected to the detector array 12 for analysis. The reflector 14 may comprise a mirror, flat mirror, lateral transfer mirror (LTM), vertical transfer mirror (VTM), retroflector, or other device. In one embodiment the reflector 14 may comprise a lateral transfer mirror to reflect radiation from the source 10 along a path displaced laterally or vertically, depending on orientation, from the incident direction.

### Imagine Unit

The RSD may include an imaging unit 16 to capture and/or record an image of a vehicle passing by the RSD. The imaging unit 16 may be arranged to record an image of a vehicle at a specified location relative to the detection system. The imaging unit 16 may comprise, for example, a camera, such as a film, video or digital camera. Other imaging devices may also be used.

Preferably, the imaging unit 16 may record an image of the vehicle identification tag (*i.e.,* license plate). Tag information may be processed, using a suitable data processor, to provide additional information about the vehicle. For example, Motor Vehicle Department databases may be accessed to retrieve owner information, make, model type, model year and other information. In some embodiments, this additional information may be incorporated into the emission sensing data analysis. For example, the make and model year of the vehicle may be used to determine input information for certain processing steps, including information such as whether the vehicle includes a carburetor or fuel injector, whether the car runs on diesel fuel or gasoline, *etc.*

### Speed and Acceleration

The RSD may also include a speed and acceleration detection unit 18. Preferably, a vehicle's speed and/or acceleration may be measured as it passes the RSD using speed detection unit 18. For example, the speed and acceleration detection unit 18 may comprise an arrangement of laser beams or other light beams associated with timing circuitry. According to an embodiment of the invention, the laser or light beams may be arranged to traverse the path of a vehicle at various points. As a vehicle passes, it will cause interruptions in the laser or light beams. The times at which the beam interrupts occur may be used to calculate the vehicle's speed and/or acceleration. Other methods of determining vehicle speed and/or acceleration may also be used.

According to another embodiment of the invention, the laser or light beams may be arranged to traverse the path of a vehicle at a single point in the vehicle's path. For example, radar systems may be used to determine vehicle speed and acceleration. Alternatively, transducers, piezoelectric elements, or other "drive over" detectors may be placed at locations in the roadway to monitor vehicle passage. Preferably, speed and/or acceleration data may be input into a data processing unit 22 to help characterize vehicle operating conditions (*e.g.*, accelerating or decelerating) or to be used to determine which vehicle is to be associated with a particular sensor measurement. Other uses of the speed and acceleration data are also possible.

### Thermal Detection Unit

Some embodiments of the invention may incorporate a thermal detection unit 20. Preferably, the thermal detection unit 20 may comprise a non-contact thermometer system. For example, an IR thermometer may be used to optically detect the temperature of remote objects. Other temperature detection systems may also be used.

Preferably, the thermal detection unit 20 is used to detect the temperature of portions of the vehicle passing through the RSD. Some embodiments may use direct sensing of the area of interest. For example, an IR thermometer may be aimed at the underside of a passing vehicle to detect the temperature(s) of vehicle components (*e.g.*, engine, catalytic converter, muffler, etc.). Indirect sensing may also be used. For example, an IR thermometer may be aimed at the roadway to measure the heat of the passing vehicle which is reflected from the roadway surface.

Preferably, the thermal information recorded by the thermal detection unit 20 may be used to indicate that the engine has just recently been started (*i.e.*, the engine is "cold" or has not reached normal operating temperature). Such a cold engine reading may be used, for example, to initiate an alternative data processing routine. Certain embodiments of the present invention may reduce the chance of a potentially misleading reading by also detecting the temperature of other portions of the vehicle. Other uses for collected thermal data are also possible.

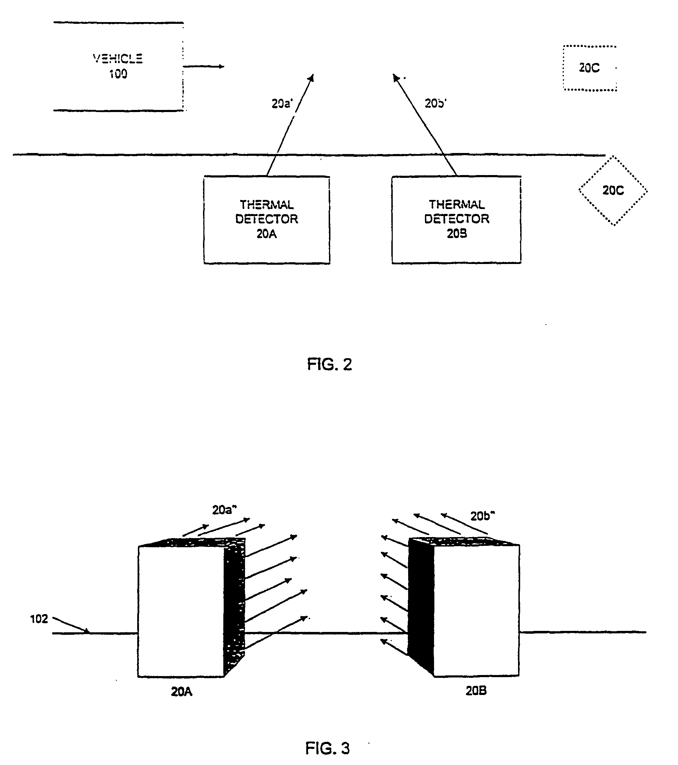

Thermal detection unit 20 may comprise various detection apparatus configurations. For example, Fig. 2 depicts a thermal detection system that may be incorporated into an embodiment of the RSD. As shown, two thermal detectors 20A, 20B are arranged to detect a vehicle 100 travelling in a traffic lane 102. Preferably, the thermal detectors 20A, 20B are positioned at points affording different angles of view 20a', 20b' at vehicle 100. For example, the thermal detectors 20A, 20B may be positioned near the locations of speed and acceleration detection units (*i*.*e*., spaced with some distance between detectors). Spatial separation of the detectors 20A, 20B and the differing angles of view 20a', 20b' increase the likelihood of detecting the temperature of the areas of interest on the vehicle (*e.g.*, the engine, catalytic converter, etc.) and also afford a time sequence of measurements since the vehicle passes one detector, then the other at a later time. In some embodiments, an additional thermal detector 20C may be incorporated into the RSD. Detector 20C may be positioned at a suitable location to detect the temperature of the front of the vehicle (*e.g.*, the radiator or engine). For example, detector 20C may be positioned at either side of the lane 102, at a sufficient height to detect the front of the vehicle, or detector 20C may be embedded into lane 102 to record a head-on view of an oncoming vehicle.

Some embodiments of the invention may include arrays of thermal detectors to increase the likelihood of obtaining the desired temperature readings. For example, in an embodiment incorporating an IR thermometer, an array of detection beams 20a", 20b" may be aimed at the vehicle 100. The array may span vertical and horizontal regions, as shown in Fig. 3. Using such an array of detection beams allows the thermal detection unit 20 to detect the temperature of vehicles of varying size and shape. In addition, some of the beams in the array may be used to detect reflected heat off of the road surface of lane 102.

Using an array of detector beams 20a", 20b" may also provide greater precision in temperature measurements. The focal point of each detection beam in the array can be narrowed to detect the temperature of a small region of interest. In this manner, a more precise temperature reading for each point may be obtained. For example, a detector beam with a focal point four inches in diameter will take an average temperature over the whole four inch region within the focal point If the region of interest happens to be a one inch exhaust pipe on a vehicle, the detector will average the temperature of the region of interest (*i.e.*, the pipe comprising one-fourth of the focal region) with objects outside of the region of interest (*i.e.,* the other three fourths of the focal region). In contrast, an array of smaller focal point detector beams (*e.g.*, one inch in diameter each), if properly aligned, will be more likely to provide a precise temperature reading for a small region of interest.

### Processing Unit

The RSD preferably includes a data processing unit 22. The data processing unit 22 may include a suitable processing device, for example, a computer or other microprocessor. The data processing unit 22 may optionally employ software to accomplish desired analysis of collected and/or stored data. For example, software may be used to calculate the relative amounts of various exhaust gas constituents, concentrations of various exhaust gas constituents (*e.g.,* HC, CO₂, NOₓ, CO, etc.), the decay rate (*e*.*g*., dissipation in time) of the exhaust constituents, the opacity of the exhaust plume, the temperature, speed and acceleration of the vehicle, and to determine other desirable information as well.

In a preferred embodiment, data processing unit 22 is employed to calculate the relative amounts of various exhaust gas constituents by computing the ratio of the absorption for a particular exhaust gas constituent to the CO₂ absorptions. This preferred method eliminates the need to calculate the total amount of exhaust plume present since the calculated ratios alone provide sufficient information to identify vehicles which do not meet predetermined pollution criteria. Also, should the calculation of absolute concentrations of various components be required, an estimated value of CO₂ concentration based on vehicle type, fuel type, calibration readings or other methods, may be employed for this purpose.

The data processing 22 unit may also comprise software to accomplish other data analysis functions. For example, vehicle emission data may be checked for running losses. Running losses may typically include emission readings due to fuel system leaks on a vehicle (*e.g.*, leaky fuel tank filler cap, fuel line, etc.), blow-by emissions (*i.e.,* crank case emissions blowing by the piston rings), emissions due to other vehicles in the vicinity or other systematic losses.

The data processing unit 22 may also include software to accomplish various vehicle owner notification functions. For example, the owner of a vehicle that has been recorded as being in compliance with certain predetermined emission levels may receive a notification. Coordination with local authorities may be arranged to grant vehicle owners a waiver or pass of local emission certification procedures upon receiving such a notification. Likewise, vehicles that fail to meet predetermined emission levels may receive a notification requiring the owner to remedy the non-compliance. Other data processing functions are also possible.

According to one embodiment, the emission detection may be performed by a remote sensing device, such as RSD-1000™ or RSD-2000™, manufactured by RSTi, Tucson, Arizona, wherein the detection apparatus and process control software is modified to perform the novel functions set forth herein.

### Multilane RSD Unit

The invention comprises a multilane RSD that permits the detection of vehicle emissions at locations where vehicles may be traveling in multiple substantially parallel traffic lanes. Several configurations for multilane RSD's are described below. The term "multiple traffic lanes" as used herein means two or more lanes of traffic, and includes two or more lanes of traffic with vehicles in different lanes travelling in the same or opposite directions.

One embodiment of a multilane RSD comprises components as shown in Fig. 1. In this embodiment, a reflector 14 may be positioned opposite a detector array 12 across a multiple lane roadway. In any embodiment of the invention, a single detector can be substituted for the detector array 12. The single detector may be used to detect a single species of interest, or it may be used in combination with a plurality of moveable filters to detect a plurality of different species of interest. In this embodiment, the moveable filters are selected such that each filter passes a band of radiation to the detector substantially centered about the characteristic wavelength of a particular species of interest. In this manner, a single detector can be used to detect a plurality of different exhaust components by passing the radiation through a different filter for each exhaust component. For those embodiments using an active source, source 10 may also be positioned opposite reflector 14 such that the radiation proceeds from the source 10 to the reflector 14 and then to the detector array 12.

Multilane RSD embodiments where the detector array 12 and the reflector 14 are separated by more than one vehicle lane may use one of several techniques to identify which vehicle corresponds to a particular set of emission data. For example, data processing software may be used to create a decay rate curve for a given exhaust plume. The decay rate may preferably be based upon dissipation characteristics for some exhaust constituents (*e.g.*, HC, CO₂, CO, NOₓ, etc.). Comparison of these dissipation characteristics for a given exhaust plume with known or predicted standard curves can be used to determine whether the given plume is from more than one emission source. For example, if two vehicles happen to pass through the multilane RSD in close proximity, the exhaust plume decay rate curve will usually contain two distinct decay rates indicating the presence of two vehicles. If the decay curves for multiple vehicles cannot be distinguished, alternative data processing procedures may be used. For example, the data may be discarded as invalid, the vehicles may be identified for later testing or other alternative procedures for associating a particular vehicle with a particular exhaust plume may be initiated.

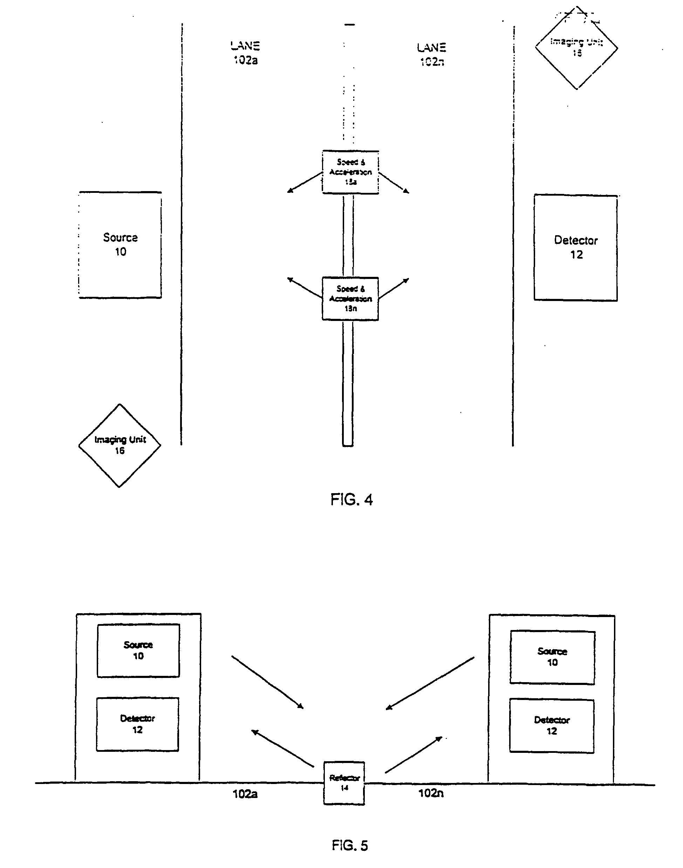

Another embodiment of the multilane RSD may comprise using speed and acceleration unit 18 and/or imaging unit 16 to assist in identifying which vehicle corresponds to a detected exhaust plume. Several configurations are described with reference to Fig. 4. One embodiment coordinates vehicle imaging data with detected plume emission data to correlate vehicles and plumes. For example, a source 10 and detector array 12 may be aligned to span a multilane roadway, of which two lanes, 102a, 102n, are shown (another configuration may comprise source 10 and detector array 12 on one side of the roadway with reflector 14 on the other, as shown, for example, in Fig. 1). Speed and acceleration units 18a, 18n may preferably be mounted in between lanes 102a, 102n and oriented to record speed and acceleration data for a single one of lanes 102a, 102n. For example, speed and acceleration units 18a, 18n may comprise laser beams projecting into one lane or the other, transducers, piezoelectric devices, or other "drive over" detectors embedded in each lane or radar guns aimed at the respective lanes. In this manner, individual speed and acceleration data for each vehicle can be obtained and matched with emission data. For example, the speed and acceleration unit 18a for lane 102a may record a vehicle speed at a time just before the unit 18n for lane 102n records vehicle speed and acceleration. Then the first occurring emission data may be associated with the vehicle in lane 102a and the second with the vehicle in lane 102n.

Other embodiments may achieve the same differentiation of vehicles using an imaging unit 16. For example, imaging units 16 may be arranged to view vehicles traveling in a specific lane 102a, 102n (or in a specific direction of travel for lanes with traffic flow in opposite directions). In this manner, recorded vehicle image data may be associated with recorded emission data. For example, a vehicle traveling in lane 102a may have its image recorded moments before a vehicle traveling in lane 102n, then the first occurring emission data may be associated with the vehicle in lane 102a and the second with the vehicle in lane 102n. Other embodiments, comprising various combinations of speed and acceleration units 18 and imaging units 16, are also possible.

A further embodiment of the multilane RSD is shown schematically in Fig. 5. As shown, this embodiment may comprise a source 10 and a detector array 12 positioned on the side of each lane 102a, 102n of a roadway. For this configuration emission sensing is preferably accomplished for a two lane roadway. However, sensing across more than two lanes may be possible at a suitable roadway location. In one embodiment a reflector 14 may be positioned in the roadway. Positioning reflector 14 in the roadway may provide a reliable, unobtrusive, safe and sturdy reflector that does not present an impediment or hazard to vehicular traffic. Preferably, reflector 14 may be positioned between lanes 102a, 102n. Other locations are possible. Preferably, the reflector 14 may be located in a manner to cause the reflected radiation to intersect the exhaust plume of a vehicle. For example, a reflected radiation beam height of approximately twelve (12) to eighteen (18) inches from the road surface, in the middle of each lane 102a, 102n, should be sufficient to intersect most vehicle exhaust plumes. In this manner, each source 10 and detector array 12 will record emission data for one lane (*e.g.*, 102a, 102n). In some embodiments, it may be preferable to incorporate speed and acceleration unit(s) 18 and reflector(s) 14 into the same location (*e.g.*, in between lanes 102a, 102n).

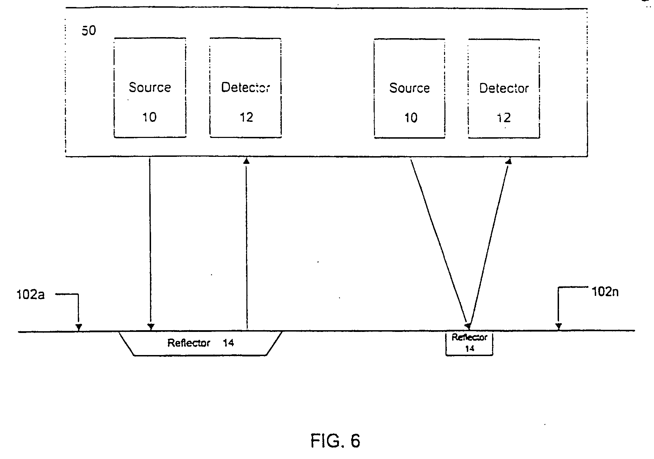

Fig. 6 shows yet another embodiment of the multilane RSD employing an overhead mounting configuration. Sources 10 and detector array 12 may preferably be positioned above a roadway. Any suitable overhead location 50 may be chosen for sources 10 and detector array 12. For example, overhead location 50 may comprise a highway sign, toll booth, overpass, bridge or similar location. In this embodiment, reflectors 14 may be mounted in the roadway, for example, in each lane 102a, 102n. In this manner, emission data may be recorded for vehicles in each lane 102a, 102n.

According to a further embodiment of the invention, multiple instruments for each lane may be used to measure vehicle emission. Each lane of a road may have two or more instruments to measure vehicle emission, thereby allowing more accurate results to be achieved. By way of example, multiple instruments may be placed side-by-side and positioned such that radiation from each instrument passes through the same exhaust plume at substantially the same time. By way of another example, multiple instruments may be placed in series and positioned such that radiation from each instrument passes through the exhaust plume from a single vehicle at different times. Other methods using multiple instruments in the same lane may also be used. Bunkered Unit

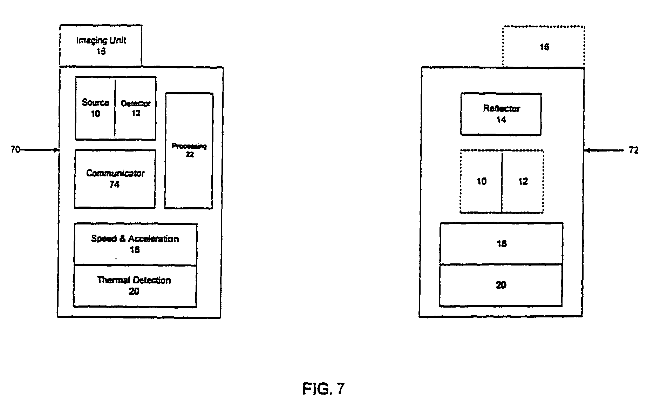

A still further embodiment of the invention comprises a compact, unmanned RSD that may be used for unattended monitoring of vehicle emission data (also referred to as a "bunkered" unit). Fig. 7, schematically depicts one possible bunkered unit. In the embodiment shown, the RSD components are packaged into two groups 70, 72. Group 70 may preferably comprise source 10, detector array 12, data processing unit 22, imaging unit 16 components of speed and acceleration unit 18 and thermal detection unit 20 and communicator 74. Group 72 may comprise reflector 14, and components of speed and acceleration unit 18 and thermal detection unit 20. Components of speed and acceleration unit 18 and thermal detection unit 20 are depicted as split between the two groups 70, 72 to represent units 18 and 20 that span a roadway lane(s) (*e*.*g*., a speed and acceleration unit 18 may comprise a comprising laser beam and sensors to detect the laser beam). Other embodiments may not require splitting speed and acceleration unit 18 and thermal detection unit 20. In such embodiments the units 18 and/or 20 may be located entirely in one of groups 70, 72. In some embodiments, the speed and acceleration unit(s) 18 may be placed in close proximity to the data processing unit 22. For example, the speed and acceleration unit 18 may be placed within five (5) feet of the data processing unit 22. Other groupings of components may be possible. For example, as indicated in dashed lines, imaging unit 16 may be located at other locations (*e.g.*, with group 72). In addition, some embodiments may comprise a source 10 in one group and a detector array 12 in another, thus, eliminating the need for a reflector 14. Such an arrangement is indicated by the dashed source 10/detector array 12 included with group 72. Communicator 74 may communicate information, such as measured vehicle emissions and identification tag information, from RSD. Communicator 74 may communicate by a wire connection, such as cable or telephone line, or a wireless connection, such as by a radio, cellular, satellite transmitter or other types of suitable wireless communication. Information may be communicated to another location for storage, processing, viewing, or other use of the information. Other types of communication may also be used.

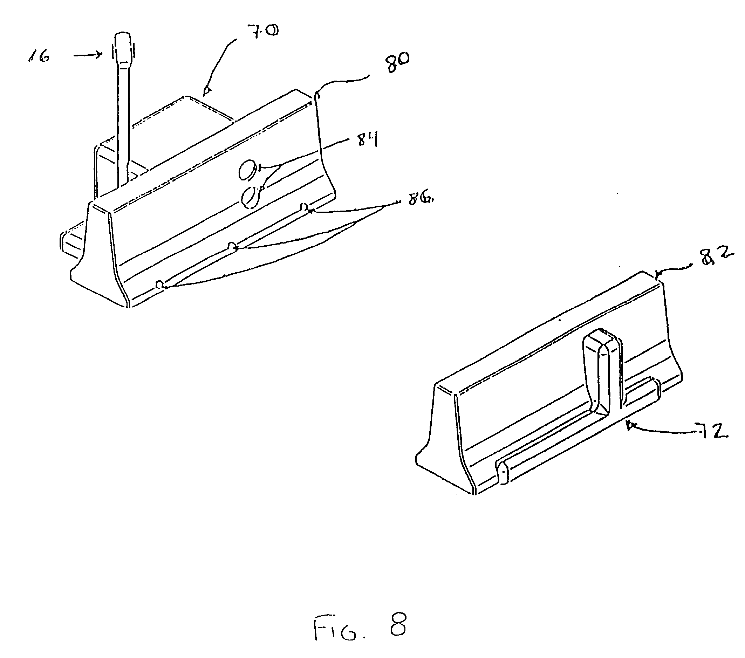

One embodiment of the grouped or bunkered unit may comprise incorporating one or more RSD's into existing roadway structures. Preferably, roadway structures such as toll booths, concrete lane dividers (e.g., Jersey barriers), divided highway barriers and other structures may house one or more RSD's. For example, Fig. 8 depicts an RSD incorporated into concrete lane divider structures 80, 82. As shown in Fig. 8, the structures 80, 82 may include modifications to enable the various components to function. For example, apertures 84 may provide the source 10 and the detector array 12 access to project and receive the emission detection beam. Likewise, apertures 86 may provide speed and acceleration unit 18 and/or thermal detection unit 20 with access to the roadway. Other modifications may be possible.

One embodiment of the bunkered RSD unit may comprise modifications to data routines or software within processor 22. Preferably, these modifications compensate for changes in the sensing routine due to the grouping of components. Moving imaging unit 16 into close proximity with group 70 may cause changes in how the image of the vehicle is recorded. For example, moving imaging unit closer or to group 70 may lengthen the delay required to trigger imaging unit 16 in a timely fashion to record the vehicle being detected. Other changes may also be necessary.

One embodiment of the invention reads an identification tag on a vehicle in order to identify the vehicle and associate particular sensed vehicle emission information with the vehicle. As noted previously, according to an embodiment of the invention, an identification tag may comprise a license plate. An imaging unit 16, such as an automatic license plate reader, may record license plate information to obtain vehicle information. An identification tag comprising a transponder located on or within a vehicle may alternatively be used to identify a particular vehicle and/or obtain vehicle information. A transponder may be located within a tag that is placed within the vehicle (*e.g.*, hung from a rear view mirror, placed on the dashboard, *etc.*), or that is integral within the vehicle (*e.g.*, part of a global positioning system ("GPS"), located within the engine of the vehicle or elsewhere). A transponder may transmit information about a vehicle, including make and model of the vehicle, engine characteristics, fuel type, the owner of the vehicle, and other information which may be pertinent. According to an embodiment of the invention, a transponder may be used in connection with other functions. By way of example, a transponder may also be used in connection with a toll pass, whereby a driver can electronically pay tolls via the transponder without stopping the vehicle.

An identification tag may also comprise a tag or decal that requires a reader. By way of example only, an identification tag may comprise a decal with identifying marks (*e.g.*, bar codes, infrared markings, *etc*.) containing information about the vehicle. The decal may be located outside the vehicle, such as on a front or rear bumper, on the under-side of the vehicle, or any other location on the vehicle where the decal may be suitably read. A reader may observe the decal and thereby obtain information about the vehicle. One preferred embodiment employs a bar code placed on the roof of the vehicle which can be read by a reader placed above the vehicle.

A receiver may be used to obtain information from an identification tag. According to an embodiment of the invention, an antenna may receive signals transmitted from an identification tag containing a transponder. Any type of conventional receiver may be used to receive signals. According to an embodiment of the invention, one reader and/or receiver may be used in connection with multiple lanes. Based on the signal received or the decal read, a receiver or reader may determine in which lane a particular vehicle is located at a particular time.

A data processing unit 22 may receive information about a vehicle from a reader and/or a receiver. According to an embodiment of the invention, data processing unit 22 may receive vehicle information. Vehicle information and information obtained by sensing vehicle emissions may be stored. Data processing unit 22 may correlate vehicle information received from an identification tag with the results from vehicle emissions sensing. Data processing unit 22 may update a vehicle record to account for the results obtained by processing vehicle emission data, such as indicating whether a vehicle has passed or failed predetermined emissions criteria.

According to an embodiment of the invention, for a typical two-lane rural freeway, a system may be placed at a roadway overpass on the downstream side of the bridge structure and may consist of a linear array of optical remote sensors looking vertically down at the roadway at predetermined intervals (*e.g.*, approximately two foot intervals). By way of example, for a twenty-four foot wide roadway, thirteen units would look down and onto each side of two twelve foot wide lanes to provide substantially complete coverage of the lanes. The roadway may have embedded in it hard wearing reflectors, exactly level with the road surface so as not to be felt by passing vehicles. By way of example, in a system having thirteen units, there may be thirteen reflectors spaced at approximately two foot intervals below the thirteen detector arrays. Each unit would have an outgoing and a return beam, such as shown in the shape of a close angled V.

The timing of data collection by an array of detectors may be determined and stored by a single master computer. Detector units or detector arrays may return to the master computer a data stream consisting of times and detector voltages or time and calibrated gas absorption measurements. The master computer may generate a time and space indexed array of emissions data. By way of example, at least two beams may be blocked by any vehicle larger than a motor bicycle passing through the beams. The location and timing of all vehicles which pass by may be determined from this beam blocking and any detector arrays which observe exhaust plumes, including those recently unblocked, may be used to obtain emissions data. For a twelve foot wide lane, with detector arrays spaced at two-foot intervals, two beams may be blocked, while five beams may be received at other detector arrays. With this arrangement and a system which keeps accurate timing, it is possible to determine which vehicle a given exhaust plume is coming from, even when two vehicles pass simultaneously in parallel lanes or when exhaust is spread by, for example, turbulence behind vehicles and cross winds.

A plurality of video cameras mounted on a roadside pole upstream of the RSD may be triggered by the beam unblocks (as in the current horizontal beam systems) to capture an image of the rear of a vehicle if individual vehicle information is desired. This concept may be extended to multiple lanes.

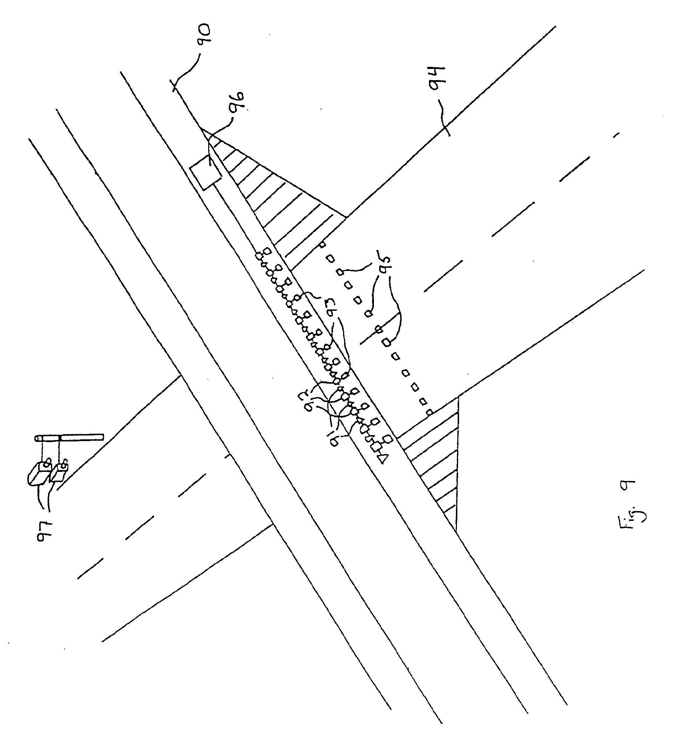

Figure 9 illustrates an example of an overhead system according to an embodiment of the invention. An array of light sources 91 and detectors 92 provided with moveable filters 93 may be placed on a bridge structure 90 going over a multi-lane roadway 94. According to an embodiment of the invention, for pollutant measurement including CO, CO₂ and HC, infrared radiation may be used for the light sources 91. According to another embodiment of the invention, if NO data are required, a light source combining UV and IR radiation may be used or a diode laser high resolution IR source may be used. Light from each light source 91 may be reflected by a reflector 95 to its individual detector 92. Each detector 92 may measure individually the wavelengths associated with the pollutant measurements desired. According to an embodiment of the invention, each light source 91 and detector 92 may be slaved to a timer of a processor 96 so all events (beam blocks and emissions measurements) have a common time stamp.

Each detector 92 may report events back to processor 96 which may be equipped with specialized software which enables it to discern from the array of time, space, beam block and detector information which vehicle is to be associated with a particular plume measurement. In some cases, plume measurements may be attributed to a plurality of vehicles by processor 96 in which case the plume measurement may be discarded or it may be employed using an alternative calculation to account for the multiple vehicles. Processor 96 may control video cameras 97 so as to capture images of vehicles, if vehicle identification is desired.

According to an embodiment of the invention, each pair of light source 91 and detector 92 may act as an independent on-road measurement unit. Those pairs which see a fully blocked beam may be treated very much like the normal horizontal beam systems. The unblocking of the beam by passage of the vehicle out of the beam may trigger a video camera 97 to take a picture and the various emissions measurements may be compared to measurements taken before the beam block to ensure that the observed exhaust is from that vehicle. Data from a source/detector pair which does not see a beam block may be analyzed by processor 96 to determine if an exhaust plume was seen, and if seen where it occurred in space and time relative to any local beam blocks and unblocks and/or other exhaust plume measurements. Such factors as wind speed, vehicle speed and/or acceleration, and wind direction may enter into such determinations. Determining the source of a particular exhaust plume may require multiple pattern recognition software in certain circumstances.

Light source 91 may be any source of light, such as infra-red radiation. According to an embodiment of the invention, infra-red radiation may be required to have a reasonable brightness at 3-4 micron wavelengths. By way of example, a silicon carbide (SiC) resistively heated source may be used. Other possibilities may include light emitting diodes and diode lasers. With diode lasers, near-IR overtone wavelengths may be used. According to an embodiment of the invention, if NO measurements are required, either a tunable diode laser or a UV source may be used. Other examples of light sources 91 that may be used in connection with the present invention include a hot wire, silicon carbide or other carbide filament, a hot glass/quartz envelope around a filament, or other hot materials such as alumina IR sources. According to an embodiment of the invention, light source 91 temperature may be as warm as possible. By way of example, the SiC light source is preferably maintained at about 1700°K (1400°C).

Detectors 92 may include any type of detector meeting required signal/noise criteria. According to an embodiment of the invention, electrically cooled lead selenide detectors may be used. Others types of detectors may also be possible in connection with this invention. Examples of detectors that may be used in connection with the present invention include, lead sulfide, HgCdTe and IbSb. For an IR wavelength range, an IbSB may be used at a temperature of 77K (-223C). Lead selenide may be optimally used when cooled to a temperature of 210K (-90C). This low temperature may be hard to achieve thermoelectrically, so a higher temperature may alternatively be used.

According to an embodiment of the invention, reflector 95 on roadway 94 may be a flat mirror so that reflector 95 may be flush with roadway 94. By way of example, a sapphire flat plate with a gold coating on the back of the plate may be used as sapphire is a very tough material and transparent in the IR and UV bands. By way of another example, if UV reflectivity is required, an aluminum coating may be used in place of a gold coating. According to another embodiment of the invention, a full comer-cube retroreflector or a pair of mirrors at right angles may be used to achieve the required beam return to detector 92. Other examples of reflectors 94 that may be used in connection with the present invention include materials which can be front silvered, such that a polished aluminum plate or gold coating could be used. A back silvered material requiring both IR transparency and considerable toughness, or some type of synthetic spinel mineral with a gold or aluminum coating may also be used.

Other embodiments and uses of the invention will be apparent to those skilled in the art from consideration of the specification and practice of the invention disclosed herein. The specification and examples should be considered exemplary only and the scope of the invention should be determined from the claims appended hereto.

## Claims

1. A system for the remote sensing of vehicle emissions in a multilane setting with two or more vehicle travel lanes, (102a, 102n), the system comprising:
at least one radiation source (10, 91) which emits a radiation beam across two or more vehicle travel lanes; and through an exhaust plume of a vehicle;
at least one radiation detector (12, 92), for receiving the radiation beam;
a receiver for receiving a signal from a transponder associated with the vehicle, wherein the signal includes vehicle information; and
at least one processor (22), chatacterized in that the at least one processor receives emissions data from the at least one radiation detector and vehicle information from the receiver and associates the emissions data with the vehicle information for the vehicle.

2. The system of claim 1, wherein emissions data and vehicle information for a vehicle are associated in a vehicle record.

3. The system of claim 1, wherein the transponder is located within a tag that is placed within the vehicle.

4. The system of claim 3, wherein the tag is also used as a toll pass.

5. The system of claim 1, wherein the transponder is integral with a vehicle global positioning system (GPS).

6. The system of claim 1, wherein vehicle information received from a transponder includes an identification of the vehicle owner.

7. The system of claim 1, wherein vehicle information received from a transponder comprises at least one of fuel type or vehicle make and model.

8. The system of claim 1, wherein the signal received from the receiver is used to determine in wliich vehicle travel lane the vehicle is located.

9. The system of claim 1, further comprising at least one reflector (14) for directing the radiation beam emitted from the at least one radiation source (10) to the at least one radiation detector (12).

10. The system of claim 1, further comprising at least one speed and acceleration device(18) for determining the speed and acceleration of the vehicle.
